Europäisches Patentamt

(19) European Patent Office

Office européen des brevets

(11) Publication number: **0 258 041**
**B1**

# (12) EUROPEAN PATENT SPECIFICATION

(45) Date of publication of the patent specification:
06.06.90

(51) Int. Cl.⁵: **B62M 9/08**

(21) Application number: **87307519.6**

(22) Date of filing: **25.08.87**

(54) Belt driving apparatus for bicycle.

(30) Priority: **26.08.86 JP 199384/86**
**25.11.86 JP 280145/86**

(43) Date of publication of application:
**02.03.88 Bulletin 88/9**

(45) Publication of the grant of the patent:
**06.06.90 Bulletin 90/23**

(84) Designated Contracting States:
**DE FR GB IT**

(56) References cited:
**DK-A- 507**
**FR-A- 2 426 193**
**FR-A- 2 479 767**

(73) Proprietor: **Bando Chemical Industries, Ltd., 2-15,
Meiwadoori 3-chome, Hyogo-ku Kobe City Hyogo
Prefecture(JP)**

(72) Inventor: **Hirose, Shinichiro, 1-48-8, Shintoride,
Toride-shi Ibaragi-ken(JP)**
Inventor: **Akamatsu, Kanzo, 1170, Matsugasaki,
Kashiwa-shi Chiba-ken(JP)**

(74) Representative: **Brooke-Smith, Fred et al, STEVENS,
HEWLETT & PERKINS 5 Quality Court Chancery Lane,
London WC2A 1HZ(GB)**

## Description

This invention is concerned with belt driven bicycles and relates more particularly to an apparatus for driving such a belt.

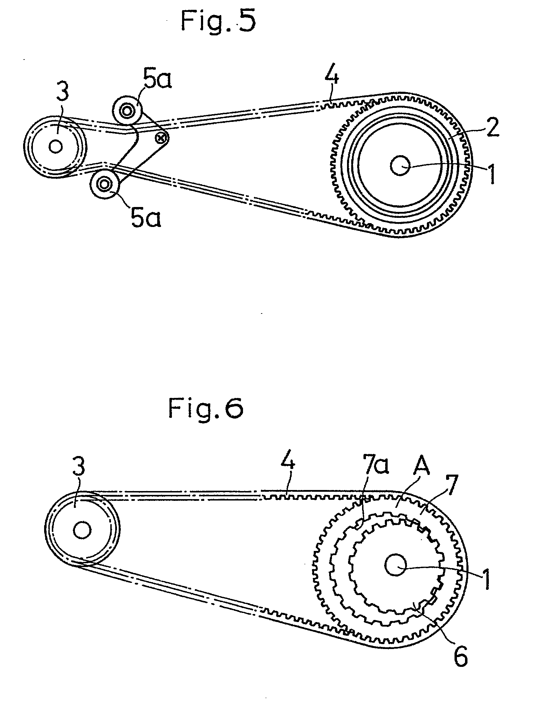

Figures 5 and 6 of the accompanying drawings illustrate known apparatuses of this kind.

Figure 5 shows a known belt driving apparatus for a bicycle comprising a driving pulley 2 of large diameter mounted on a crank shaft 1 and a driven pulley 3 of small diameter mounted on a shaft (not shown) disposed at one side of a rear wheel, a toothed belt 4 being trained over the driving and driven pulleys 2, 3. Idlers 5a which are close to each other act against the toothed belt 4 to apply a certain tensile force thereto in order to prevent the toothed belt 4 from being removed or slipping when the bicycle is running. The idlers 5a cause a reverse curvature to be applied to the belt, which under driving tension causes damage to the belt. This requires the belt to be replaced after a short time.

Figure 6 shows another known belt driving apparatus which comprises a driving gear 6 mounted on the crank shaft 1, a floating wheel 7 with internal teeth 7a which meshes with the driving gear 6, and a toothed belt 4 trained over the floating wheel 7 for rotatably driving the driven pulley 3. The driving gear 6 and a floating weel 7 are both of large diameter, since the floating wheel 7 is driven at a reduced speed by the driving gear 6. The disadvantage derived from the use of the large diameter driving gear 6 and floating wheel 7 is that the weight of the bicycle is increased. In a belt driving apparatus of this type, the internal teeth 7a in a position adjacent to a point A of the floating wheel 7 become disengaged from the teeth of the driving gear 6 or come out of mesh therewith due to the inconsistent extent of eccentricity of the floating wheel 7 when the pedals are worked energetically. This can cause damage to the teeth.

An alternative belt driving apparatus has been proposed wherein a driving gear of small diameter is disposed in a drum with internal teeth mounted on a crank shaft such that they mesh with each other, thereby obtaining a higher rotational speed. However, a large difference in diameter between the drum and the driving gear has been found to be noisy and therefore disadvantageous.

FR-A 2 479 767 and DK-A 507 both show chain drive mechanisms for bicycles employing gears rotating about a fixed eccentric and meshing with an internal gear on the crank.

It is an object of the invention to provide a belt driving apparatus for a bicycle which has an automatic tension-maintaining mechanism capable of driving a toothed belt and a gear without causing damage to the belt, and which is capable of being made light and compact and of assuring quiet driving rotation of the rear wheel.

According to this invention there is provided a belt driving apparatus for a bicycle, comprising a driving gear having an externally-toothed outer gear for engagement by a toothed drive belt, an externally toothed inner gear fixed to the outer gear and disposed coaxially within the outer gear but radially spaced therefrom; a crank gear having a boss part for mounting on a crankshaft of the bicycle, a crank arm connected to the boss part and a ring of internal gear teeth disposed between the inner and outer gears and meshing with the teeth of the inner gear; an outer wheel engaged within and disposed coaxially with said inner gear, an inner wheel engaged on and disposed coaxially with said boss part and a control plate locating the outer wheel relative to the inner wheel so as to maintain the axis of the inner and outer gears eccentrically disposed relative to the axis of the crank gear whereby the teeth of the inner gear are maintained in constant mesh with the internal teeth of the crank gear, and the arrangement being such that the crank gear and the inner gear can rotate about their respective axes relative to the control plate.

The invention will now be described in more detail with reference by way of example to Figs. 1 to 4 of the accompanying drawings in which:

Figs. 1 and 2 are respectively an exploded perspective view and a front view of a belt driving apparatus according to this invention, and

Figures 3A, 3B and 3C and Figures 4A, 4B and 4C are schematic views explanatory of the manner in which the apparatus shown in Figure 1 is operated in succession.

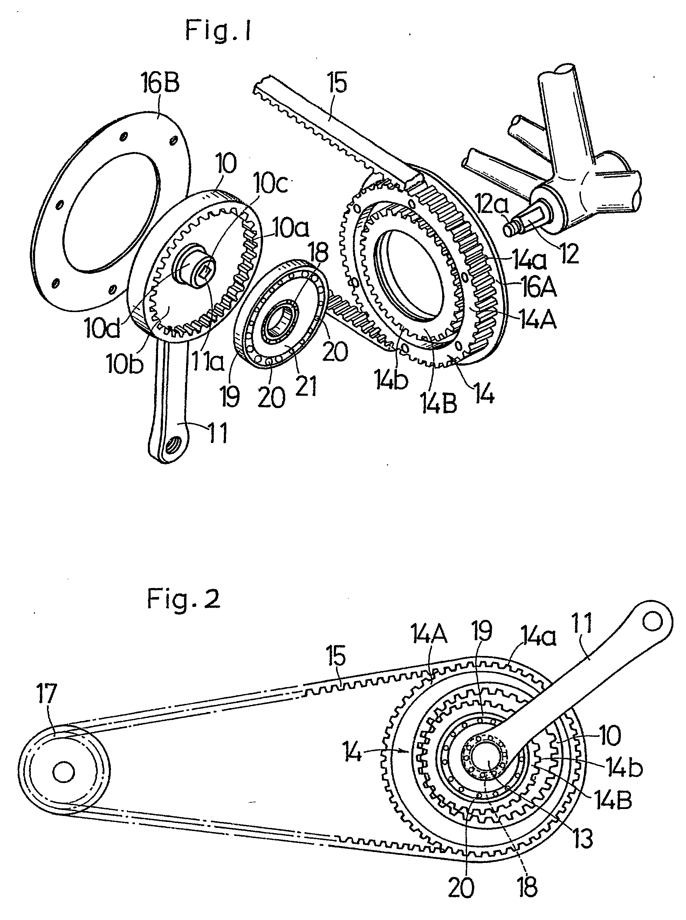

Referring to Figures 1 and 2, a belt driving apparatus for a bicycle according to this invention includes a crank gear 10 which is provided on its inner periphery with teeth 10a and which includes an integral side wall 10b. A boss 10d extends from the centre of the side wall 10b and is formed with a square opening 10c into which is inserted the squared end of the crank shaft 12. A cap 13 is screwed onto a thread 12a formed at the outer end of the crank shaft 12 to secure the crank gear 10 on the crank shaft 12. The pedal (not shown) is attached to the other end of the crank arm 11.

A gear assembly 14 driven by the crank gear 10 includes an outer gear 14A of large diameter which is formed on its outer periphery with teeth 14a with which a toothed belt 15 is engaged. An inner gear 14B is disposed coaxially within the outer gear 14A but radially spaced from the gear 14A. The inner gear 14B has a smaller diameter than the crank gear 10 and has teeth 14b formed on its outer periphery. An annular cover 16A is secured to one face of the outer and inner gears 14A and 14B. Another cover member 16B which covers the crank gear 10 axially inwardly of the crank arm 11 is bolted to the outer gear 14A at the other axial end face thereof. The crank gear 10 is located radially between the outer and inner gear means 14A and 14B to allow its teeth 10a to mesh with the teeth 14b of the inner gear 14B.

A wheel 18 of small diameter abuts the boss 10d of the crank gear 10. An outer wheel 19 of large diameter is mounted within the inner periphery of the inner gear 14B. An eccentricity control plate 21 is arranged rotatably through bearings 20 in engagement with the inner and outer wheel 18 and 19. The control plate 21 is eccentrically disposed relative to the inner wheel 18 by a predetermined distance.

The toothed belt 15 is formed of a rubber member containing Kevlar fibre and is trained over the outer gear means 14A and a driven pulley 17 mounted on the rear wheel.

Operation of the belt driving apparatus according to the invention will now be described.

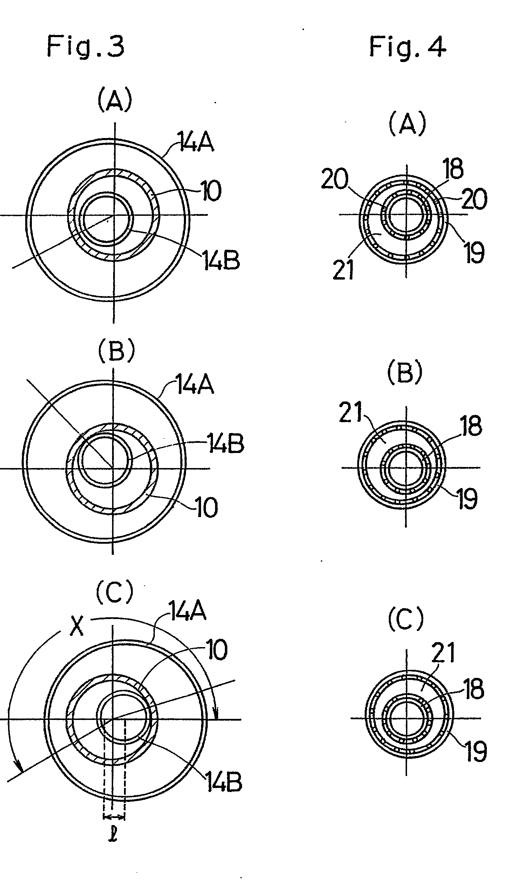

The tension in the toothed belt 15, if the belt is of a correct length, renders the inner gear section 14B of the driving gear 14 eccentric in a downward and leftward direction relative to the crank gear 10, its teeth 14b thereby meshing with the teeth 10a of the crank gear 10, when the bicycle is not running. In this condition, the control plate 21 is eccentric leftwardly and downwardly relative to the inner wheel 18 as shown in Figure 4A. Referring to Figure 2, the upper run of the belt is taut and the lower run is slack.

At the beginning of operation of the pedals, rotation of the crank gear 10 is initiated so that the inner gear 14B is driven by the crank gear 10 and is thereby made eccentric leftwardly and upwardly relative to the crank gear 10, as shown in Figure 3B. The control plate 21 also becomes eccentric leftwardly and upwardly relative to the innert wheel 18 (crank gear 10), as shown in Figure 4B, since the outer wheel 19 as well as the inner gear means 14B is eccentric and rotated therewith.

When the pedals are worked hard and the bicycle is running, the inner gear 14B, as shown in Figure 3C, is eccentric just to the right of the crank gear. 10 and thereby moves the outer gear 14A forwardly in the direction in which the latter is running, thereby applying increased tension to the toothed belt 15.

Consequently, the inner gear 14B is rotated by the rotation of the crank gear 10 so that the outer gear 14A is caused to rotatably drive the toothed belt 15. The control plate 21, as shown in Figure 4C, is in turn moved into a position in which it is eccentric just to the right of the inner wheel 18 and remains in that position.

In this manner, the toothed belt 15 is rotatably driven and remains in tension automatically, without being subjected to reverse curvature, due to the eccentric movement of the driving gear 14. For this reason, the toothed belt 15 does not suffer the damage associated with reversal of the curvature.

The inner gear 14B of small diameter is eccentric in relation to and is rotated by the crank gear 10 to increase the rotational speed of the outer gear 14. As a result, the driven pulley 17 may be rotated at an increased speed without requiring the outer diameter and dimension of the outer gear 14A to be increased so much.Thus for transmitting a given amount of work, a narrower belt than hitherto can be employed for the toothed belt 15 due to the decrease of the tensile force applying thereto since the rotational speed of the toothed belt 15 is increased with a result that the widths of the driving gear 14 and driven pulley 17 can be reduced. This reduces the weight of the apparatus as a whole and renders the present apparatus light. In addition not only may the toothed belt 15 be reduced in length and width but there is also a small difference in the outer diameter and dimension of the crank gear 10 and the inner gear 14B, thereby reducing generation of noise.

The maximum eccentricity of the inner gear 14B relative to the crank gear 10 is limited to a given value by the control plate 21, the teeth 14b of the inner gear 14B positively meshing with the teeth of the crank gear 10 up to the position of eccentricity shown in Figure 3C. The teeth 10a of the crank gear 10 are, therefore, prevented from being disengaged from the teeth 14b of the inner gear 14B and thus no damage of these teeth 10a, 14a occurs. The angle in which the inner gear 14B operates is large, covering a range of about 180° (see angle X), as shown in Figure 3C. This allows the pedal to be worked smoothly and tensile force to be gradually exerted on the toothed belt 15 to cause the automatic tensioning action to minimize stretching of and damage to the belt to a removable degree. The inner gear 14B (driving gear 14) is eccentrically moved to the maximum extent. Thus gear accuracy is not required in setting the length and dimension of the toothed belt 15, and the operations required for training the toothed belt 15 over the driving gear 14 and the like are thus facilitated. Further, the toothed belt 15 may be rotatably driven even if it becomes stretched due to long use since the driving gear 14 is moved to a greater extent such as to accommodate such stretching.

Moreover, since the control plate 21 is mounted between the outer and inner wheel 19 and 18 through bearings 20, the eccentric movement of the control plate 21 takes place smoothly even while the driving force is applied thereto. As a result, automatic tensioning action is obtained constantly with little rotational torque loss.

The eccentric control plate 21 interposed between the inner gear 14B and the crank gear limits the extent of the eccentricity of the driving gear to a predetermined value, and the length of the toothed belt is predetermined at a value such as to limit the position of eccentricity of the driving gear rightward (as shown in the drawings) from the position in which the gear assembly 14 is at its nearest to pulley 17, so that not only may the taut run of the toothed belt be rotatably driven without being subjected to reverse curvature but also the rear wheel is driven and its rotational speed is assured without any need to increase the dimension of the driving gear. As a result, the driving gear is capable of being made lighter and more compact, the belt width can be reduced and the whole drive apparatus can be made correspondingly narrower and lighter. Also, generation of noise is avoided. Not only is the driving gear made eccentric and moved while ensuring engagement of the crank gear with the inner gear, but also the area in which the inner gear is eccentric for obtaining automatic tension of the belt and the extent of movement of the driving gear is large, so that the pedals may be worked smoothly to minimize stretching of the toothed belt and damage thereto. Thus, great accuracy is not required in seeting the length and dimension of the toothed belt. Further, the operations required for training the toothed belt over the driving gear are facilitated, and the toothed belt can be rotatably driven even if it becomes stretched and is used over a long period of time. Consequently, a belt driving apparatus is provided which is capable of rendering the bicycle light and of facilitating its assembly.

**Claims**

1. A belt driving apparatus for a bicycle, comprising a driving gear having an externally-toothed outer gear for engagement by a toothed drive belt connected to a rear wheel, an externally-toothed inner gear fixed to the outer gear for rotation therewith and disposed coaxially within the outer gear but radially spaced therefrom; a crank gear having a boss part mounted on a crankshaft of the bicycle, a crank arm connected to the boss part and a ring of internal gear teeth disposed between the inner and outer gears and meshing with the teeth of the inner gear; an outer wheel engaged within and disposed coaxially with said inner gear, an inner wheel engaged on and disposed coaxially with said boss part and a control plate locating the outer wheel relative to the inner wheel so as to maintain the axis of the inner and outer gears eccentrically disposed relative to the axis of the crank gear whereby the teeth of the inner gear are maintained in constant mesh with the internal teeth of the crank gear, and the arrangement being such that the crank gear and the inner gear can rotate about their respective axes relative to the control plate.

2. A belt driving apparatus as claimed in claim 1, wherein the control plate is in rolling bearing engagement with said inner and outer wheels.

**Patentansprüche**

1. Riemenantriebsvorrichtung für ein Fahrrad, bestehend aus einem Antriebsrad mit einem außenverzahnten äußeren Zahnrad zum Eingriff in einen mit einem Hinterrad verbundenen Zahnantriebsriemen, einem außenverzahnten inneren Zahnrad, das zur gemeinsamen Umdrehung innerhalb des äußeren Zahnrades koaxial, jedoch in einem Radialabstand, angeordnet ist, einem Kurbelzahnrad mit einem an einer Kurbelwelle des Fahrrads befestigten Nabenteil, einem mit dem Nabenteil verbundenen Kurbelarm und einem Ring mit Innenverzahnung, der zwischen dem inneren und dem äußeren Zahnrad angeordnet ist und mit der Verzahnung des inneren Zahnrads in Eingriff kommt, einem äußeren Rad, das innerhalb des inneren Zahnrads in Eingriff kommt und zu diesem koaxial angeordnet ist, einem inneren Rad, das auf dem Nabenteil in Eingriff kommt und zu diesem koaxial angeordnet ist, und einer Steuerscheibe, die das äußere Rad relativ zum inneren Rad in Stellung bringt, so daß die Achse des inneren und des äußeren Zahnrads zur Achse des Kurbelzahnrads exzentrisch angeordnet bleibt, wodurch die Verzahnung des inneren Zahnrads mit der Innenverzahnung des Kurbelzahnrads in dauerndem Eingriff steht, und die Anordnung derart ist, daß sich das Kurbelzahnrad und das innere Zahnrad um ihre jeweiligen Achsen relativ zur Steuerscheibe drehen können

2. Riemenantriebsvorrichtung nach Anspruch 1, wobei die Steuerscheibe mit dem inneren und dem äußeren Rad über ein Wälzlager in Eingriff steht.

**Revendications**

1. Appareil d'entraînement à courroie pour une bicyclette, comportant un mécanisme d'entraînement qui possède un élément denté extérieur à denture externe, destiné à être attaqué par une courroie de transmission dentée reliée à une roue arrière, et un élément denté intérieur à denture externe, monté sur l'élément denté extérieur en vue de tourner conjointement avec lui et disposé coaxialement à l'intérieur de l'élément denté extérieur tout en étant espacé radialement de celui-ci; un élément denté de manivelle qui présente une partie formant moyeu montée sur un arbre de manivelle de la bicyclette, un bras de manivelle relié à la partie formant moyeu et une couronne de dents d'engrenage internes disposée entre les éléments dentés intérieur et extérieur et engrenant avec la denture de l'élément denté intérieur; une roue extérieure engagée à l'intérieur dudit élément denté intérieur et disposée coaxialement avec celui-ci, une roue intérieure calée sur ladite partie formant moyeu et disposée coaxialement avec celle-ci, et un plateau de commande qui positionne la roue extérieure vis-à-vis de la roue intérieure, de façon à maintenir l'axe des éléments dentés intérieur et extérieur excentriquement par rapport à l'axe de l'élément denté de manivelle, pour qu'ainsi la denture de l'élément denté intérieur soit maintenue constamment engrenée avec la denture interne de l'élément denté de manivelle, la disposition étant telle que l'élément denté de manivelle et l'élément denté intérieur peuvent tourner autour de leurs axes respectifs par rapport au plateau de commande.

2. Appareil d'entraînement à courroie, tel que défini dans la revendication 1, dans lequel le plateau de commande est dans une relation d'accouplement par palier à roulement avec lesdites roues intérieure et extérieure.

Fig. I

Fig. 2

Fig.3

(A)

14A
10
14B

(B)

14A
14B
10

(C)

X
14A
10
14B
$\ell$

Fig. 4

(A)

20
18
20
21
19

(B)

21
18
19

(C)

21
18
19

Fig.5

Fig.6